# EUROPEAN PATENT APPLICATION

(11) **EP 4 329 049 A1**
(43) Date of publication of application: **28.02.2024**
(21) Application number: 22791837.2
(22) Date of filing: 25.04.2022
(51) Int. Cl.: H01M 12/06, H01G 11/08, H01G 11/30, H01G 11/64, H01M 4/46, H01M 4/66, H01M 4/86, H01M 4/90, H01M 6/12

(54) **AIR ELECTRODE HAVING HYDROGEN PEROXIDE-CONTAINING ELECTRIC DOUBLE LAYER, AND METAL-AIR BATTERY USING SAME**

(30) Priority: 23.04.2021 JP 2021073490; 23.04.2021 JP 2021073534; 23.04.2021 JP 2021073535; 01.09.2021 JP 2021142106
(71) Applicant: Cross Technology Labo Co., Ltd., Aizuwakamatsu-shi, Fukushima 965-0053 (JP); Saso, Mitsuhiro, Himeji-shi Hyogo 670-0974 (JP)
(72) Inventor: SASO, Mitsuhiro, Himeji-shi Hyogo 670-0974 (JP)
(74) Representative: AOMB Polska Sp. z.o.o.
(86) International application number: PCT/JP2022/018775
(87) International publication number: WO 2022/225066

(57) **Abstract**

[Problem] Air electrode comprising a dipole electric double layer comprising hydrogen peroxide and metal-air battery comprising the same

[Solution] A cathode electrode made of metal copper in a neutral or alkaline electrolyte containing hydrogen peroxide, a metal anode having a base electrode potential of copper, and an electric double layer having hydrogen peroxide as a dipole are formed, and a separator-less battery having an insulating dipole electric double layer functioning as a separator between the anode electrode and the cathode electrode and a metal-air battery having a copper cathode having an electric double layer having hydrogen peroxide as a dipole are provided as an air electrode.

## Description

### BACKGROUND OF THE INVENTION

### FIELD OF THE INVENTION

The present invention relates to an air electrode including an electric double layer containing hydrogen peroxide, and a metal-air cell or battery using the same.

### Description of the Related Art

Hydrogen fuel cells and metal-air cells are known as fuel cells, but hydrogen fuel cells require compressed hydrogen as a hydrogen supply source, and in the case of use in automobiles, hydrogen peroxide is proposed to be used as a fuel because there are difficulties in supplying and storing compressed hydrogen gas. In addition, although a carbon electrode is generally used as the air electrode in a metal-air cell, there is a problem that the rate of ionization of oxygen at the air electrode is slower than the rate of ionization at the anode electrode, and therefore, it is common to use porous carbon and improve it (Patent Document 1). Further, in a fuel cell, poly(3,4-ethylenedioxythiophene (PEDOT), which is a conductive polymer, is used as a cathode electrode instead of a carbon electrode, while a nickel mesh is used as an anode electrode, so that a loss due to a disproportionation reaction is not generated, and a fuel cell exhibiting an open-circuit potential ranging in 0.5 ~ 0.6V with a 0.20~0.30 mW cm power density has been published (Non-Patent Document 1). On the other hand, a fuel cell using copper hexacyanoferrate (CuHCF) as a cathode material and Ni grids as an anode material has also been published (Non-Patent Document 2), but there is no versatility for use as an air electrode of the metal-air cell.

### Prior art of documents

Patent Document 1: JP 2014-220107
Non-Patent Document 1: Chemical Communications,2018, Vol.54, Pages 11873-11876
Non-Patent Document 2: Journal of Hydrogen Energy, ELSEVIER, Vol.45, Issue 47, 25 September 2020, Pages 25708-25718
Non-Patent Document 3: Eiji Minato: Progress in Physical Chemistry (1936), 10 (3): pp. 154-165

### SUMMARY OF THE INVENTION

As a result of intensive research to solve the problem of the air electrode of the prior art, the present inventor has found that; when hydrogen peroxide is supplied into the alkaline electrolyte of the metal-air cell, a dipole electric double layer having a separator function is formed at the interface between the metal electrode and the electrolyte solution, and short-circuiting of the electrode can be prevented. On the other hand, while in the fuel cell, when the metal electrode is used as a positive electrode, a disproportionation reaction of hydrogen peroxide occurs, and it has been considered that the metal electrode cannot be used for cathode, but the present inventor has also found that; if the electrolyte solution contains hydrogen peroxide, hydrogen peroxide can form a dipole electric double layer on the copper electrode surface, so that the copper electrode can be used as an air electrode and hydrogen peroxide can be used as a fuel. These findings were surprising. In view of the above, it is an object of the present invention to provide an air electrode or a copper or its alloy electrode including an electric double layer containing hydrogen peroxide, and secondly, to provide a metal-air cell including a copper or its alloy electrode including an electric double layer containing hydrogen peroxide as an air electrode.

That is, the present invention firstly provides a metal-air cell or a fuel cell comprising a neutral or alkaline electrolytic solution containing at least hydrogen peroxide, wherein a metal copper or an alloy thereof immersed in the electrolytic solution is used as a cathode electrode, and a dipole electric double layer formed of hydrogen peroxide is formed at the interface.

The present invention provides a metal-air cell or battery comprising a neutral or alkaline aqueous electrolytic solution containing hydrogen peroxide for forming an electric double layer at an interface with an electrode, a cathode electrode made of metal copper or an alloy thereof immersed in the electrolytic solution, and an anode electrode made of a metal or an alloy thereof having a more base electrode potential than the cathode electrode, wherein a dipole electric double layer is formed by an electrolytic solution containing hydrogen peroxide at the interface between the cathode electrode and the electrolytic solution, and can be used as an air electrode instead of a carbon electrode.

### EFFECT OF THE INVENTION

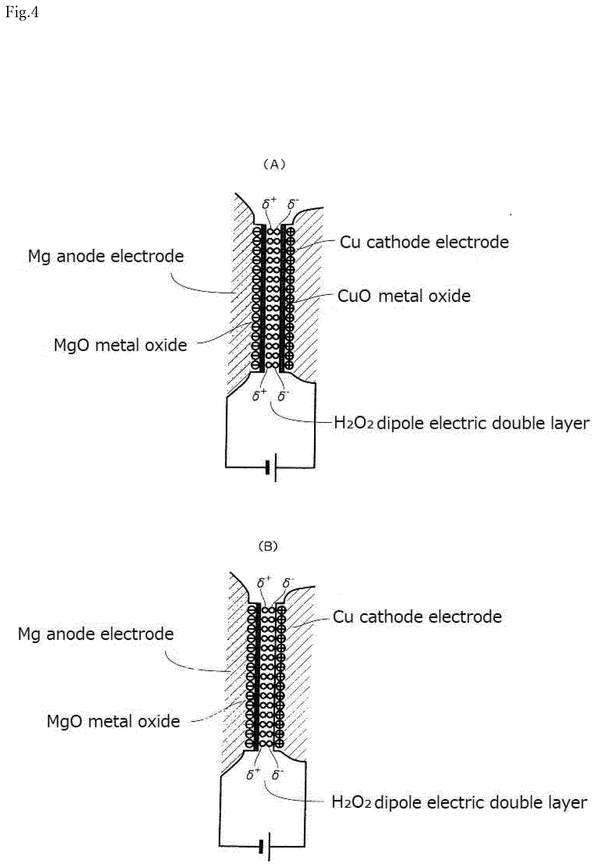

According to the present invention, hydrogen peroxide in the electrolytic solution is an electric dipole, and therefore tends to be oriented to the electrode surface and form a dipole electric double layer. Fig.4A and 4B are functional explanatory diagrams. In the figure, when the electrolytic solution is interposed between the anode electrode and the cathode electrode, an electric double layer is usually formed at the interface with the electrolytic solution on both electrodes, but in the present invention, since hydrogen peroxide is added in particular in the electrolytic solution, the dipole electric double layer can be formed by the function as a dipole. One of the factors is the function of hydrogen peroxide as a dipole. A dipole electric double layer is formed at an interface with the electrode surface by an arrangement of electric dipoles. Moreover, the hydrogen peroxide oxidation is also cooperated, according to the present invention, it is possible to improve the cause of inferior ionization progression rate of the cathode side positive electrode as compared with the anode side negative electrode, which is a bottleneck of the metal-air battery by the addition of hydrogen peroxide (please note that: the addition of hydrogen peroxide is different from the action of the depolarizing agent for avoiding the influence of hydrogen ions in the voltaic battery of the acidic electrolyte), hydrogen peroxide added to the electrolyte not only forms a dipole electric double layer, but also it makes the copper cathode to has a catalytic function as an air electrode, which exhibits various power generation reactions on the copper cathode electrode surface.

In the metal-air cell, which is supplied with hydrogen peroxide, the metal-air cell obtains electrons at the anode side by oxidation reaction of, 2Mg→2Mg ^{2 +} +4e⁻, while at the cathode side, oxygens are reduced to produce hydroxy ions by reduction reaction of O₂+2H₂O+4e⁻→4OH⁻, which generate electric power. However, when a copper-electrode is used as a cathode electrode in a neutral or alkaline electrolyte containing hydrogen peroxide, the amount of current increases. In view of this factor, in the battery having such a configuration, not only the ionization reaction delay, which is a neck of the metal-air battery, is eliminated by the addition of hydrogen peroxide, but also the generation of oxygen and hydrogen on the cathode side can be confirmed, so that it is considered that the fuel cell reaction in which hydrogen peroxide decomposition occurs on the surface of the copper electrode. Normally, in a hydrogen peroxide fuel cell, as disclosed in Non-Patent Document 1, in an acidic region
Cathode reaction:

   H₂O₂ + 2H⁺+ 2e⁻→ 2H₂O (1.78 V to NHE) (1)
Anode reaction:

   H₂O₂→ O₂ + 2H⁺+ 2e⁻ (0.682 V to NHE) (2)
Sum: The electrochemical reaction of

   2H₂O₂→ 2H₂O + O₂ (1.09 V) (3).

On the other hand, in the neutral or alkaline region of the present invention to which hydrogen peroxide is added,
Cathode reaction:

   H₂O₂+ 2H⁺+2OH⁻+2e⁻→ 2H₂O+2OH⁻ (1)
Anode reaction:

   H₂O₂+2OH⁻→ O₂+ 2H⁺+2OH⁻+ 2e⁻ (2)

It can be thought that the above electrochemical reactions are occurring at the same time.

In addition, according to the present invention, it can be thought that the dipole electric double layer containing hydrogen peroxide is caused by the decomposition of hydrogen peroxide along with the catalytic reaction on the surface of the copper cathode.
2H₂O₂ → 4OH → 2O₂+ 2H₂ + 4e⁻ (power generation response)
Or 40H⁻→O₂+2H₂O+4e- (power generation response) by the decomposition of hydroxyl ions.

### BRIEF DESCRIPTION OF THE DRAWINGS

Fig. 1 shows a conceptual diagram showing a metal-air battery of the present invention.
Fig. 2A shows a perspective view showing a copper cathode electrode via a spacer.
Fig. 2B shows a side conceptual view of a state of combining a copper cathode electrode and a magnesium anode electrode.
Fig. 3A shows a photograph of a copper cathode electrode forming a large number of micro-capacitors.
Fig. 3B shows a schematic side view of the copper-cathode electrode and the magnesium-anode electrode of 3A combined;
Fig. 4 shows a conceptual diagram showing a configuration of a capacitor of an air electrode of the present invention, wherein (A) shows a state in which an electric double layer containing a hydrogen peroxide dipole and a metal oxide is formed on the anode and cathode electrode surfaces, and (B) shows a state in which an electric double layer containing a hydrogen peroxide dipole and a metal oxide is formed only on the anode electrode surfaces.
Fig. 5 shows a conceptual diagram (A) and (B) showing a configuration in which the microcapacitor of the present invention is provided as an electric double layer.

### DETAILED DESCRIPTION OF THE INVENTION

### (Configuration of Metal-Air Battery)

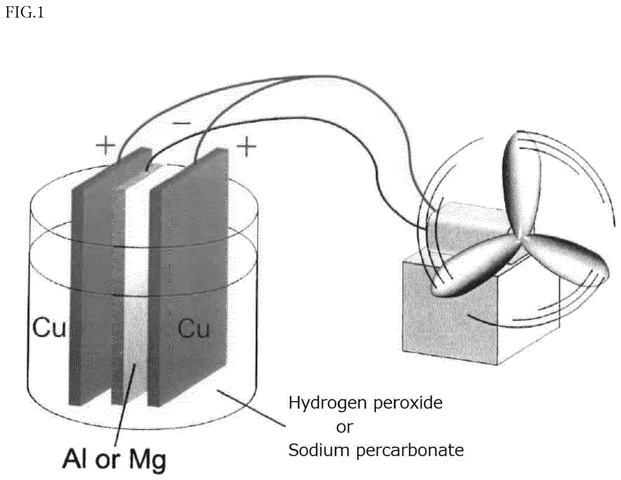

As shown in FIG. 1, Al or Mg anodic electrode and Cu cathodic electrode are immersed in a neutral or alkaline electrolyte solution containing hydrogen peroxide, and are opposed to each other to form a metal-air battery.

An electromotive force in the configuration of an alkaline electrolyte/cathode electrode comprising an anode electrode/hydrogen peroxide, the reaction of which is as follows:
The metal-oxidation reaction of the anode-side: M → M^{n +} + ne⁻,
On the other hand, it is O₂+H₂O+4e⁻→4OH⁻ to carry out an oxygen-reducing reaction on the cathode side.

In the present invention, in order to accelerate the reduction reaction on the cathode side of the metal-air battery, hydrogen peroxide was added to the electrolytic solution to improve and solve the reason why the ionization progress rate of the cathode side positive electrode is inferior to that of the anode side negative electrode.

In other words, the metallic copper dissolves somewhat in hydrogen peroxide as shown in the reaction of Cu+2H₂O₂→Cu²⁺+2OH+2OH⁻ and the reaction of Cu+2OH→Cu²⁺+2OH⁻ , but as shown in the reaction of Cu²⁺+2HO₂⁻→Cu+2HO₂ according to Haber u. Willstatter chain (Non-Patent Document 3), the HO₂ groups seems to improve and accelerate the decomposition of hydrogen peroxide.

Further, in the present invention, generation of hydrogen and oxygen gas is recognized from the cathode side, which means in addition to constituting a conventional hydrogen peroxide fuel cell (see Non-Patent Document 1), the following reaction occurrence at the same time
Cathode:

   H₂O₂+ 2H⁺ + 2e⁻→ 2H₂O (1.78 V to NHE) (1)
Anode:

   H₂O₂→ O₂+ 2H⁺ + 2e⁻ (0.682 V to NHE) (2)
Total:

   2H₂O₂→ 2H₂O + O₂ 1.099 V) (3)

It is believed that the present disclosure decomposes into hydrogen peroxide
2H₂O₂→ • 4OH along with the catalytic reaction on the copper-cathode surface to generate oxygen and hydrogen as shown in the reaction of 4OH ⇒ H +O₂+4e⁻ and, or decompose the hydroxy-ion to generate oxygen and hydrogen as shown in the reaction of 4OH⁻⇒H₂+O₂+4e⁻, and simultaneously emit electrons.

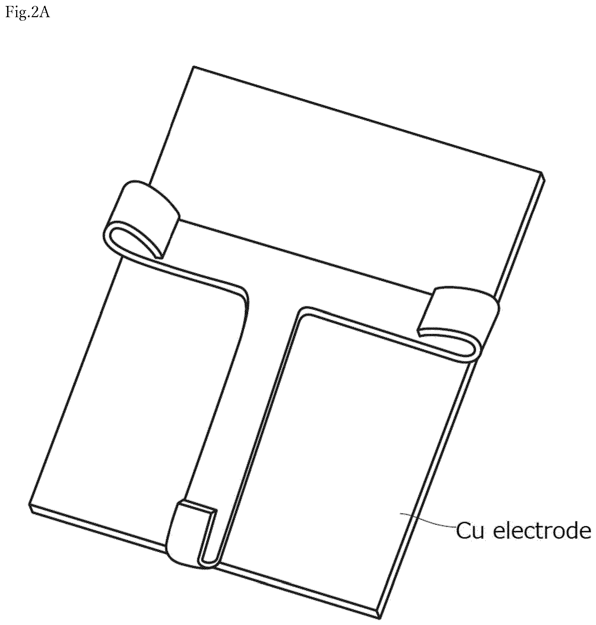

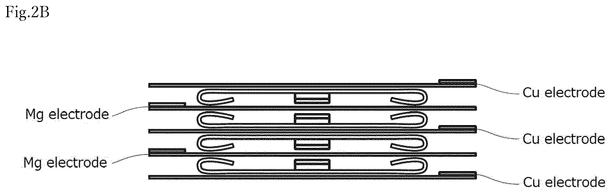

FIG. 1 is a conceptual diagram of a metal-air battery of the present invention. When an electrolyte solution containing hydrogen peroxide is interposed between Mg anode electrode and Cu cathode electrode, the electrolyte solution makes an electric double layer having hydrogen peroxide as a dipole formed at the interface between the electrolyte solution and the electrode, and at the same time an oxide of a metal-ion oxidized with hydrogen peroxide is interposed at both of the electrode surfaces (FIG. 4A) or at least on the anode side (FIG. 4B) by hydrogen peroxide. Hydrogen peroxide forms a dipole electric double layer on the cathode electrode surface as a dipole, and at the same time, magnesium, aluminum, and zinc, which are typical metals constituting the anode electrode and the anode electrode, are highly reactive with hydrogen peroxide in the electrolyte solution, and in particular, the anode metal ion is oxidized to form an oxide (a part is a metal hydroxide), so that even if the anode electrode and the cathode electrode come into contact with each other, the anode electrode is not short-circuited and the both electrodes are separated (Figures 2A and B, Figures 4A and B).

In the present invention, although hydrogen peroxide was added to the electrolytic solution as an oxidizing agent for forming an insulating electric double layer on the cathode electrode surface, various oxidizing agents for oxidizing the metal surface, as long as it has a function of forming an electric double layer, it can be understood from the description of the present specification by those skilled in the art that the same functions and effects can be achieved even if using together with hydrogen peroxide.

In the present invention, it is preferable that a part or all of hydrogen peroxide is supplied to the aqueous electrolytic solution by sodium percarbonate. Specifically, from 0.5 to 2.0 mol of an alkali metal or alkaline earth metal halide salt, in particular from a few percent to a few tens of percent hydrogen peroxide solution (by volume %) or sodium percarbonate (by weight %) is preferably added to a neutral or alkaline aqueous solution containing sodium chloride.

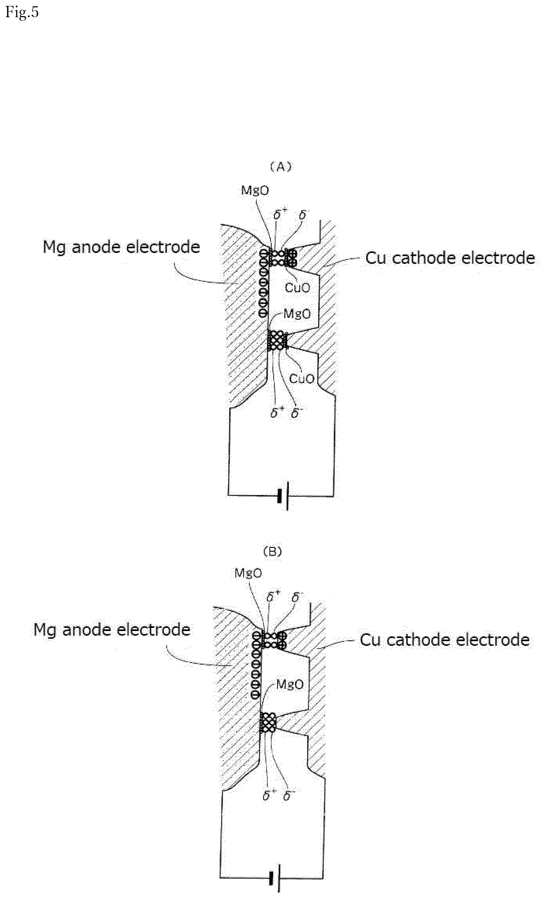

The anode electrode and the cathode electrode are alternately opposed to each other with a spacer therebetween, and an electric double layer capacitor is formed by an aqueous electrolyte solution containing hydrogen peroxide at a contact portion between the anode electrode and the cathode electrode (Figures 4A and B). Preferably, the spacer is made of the same metallic copper or copper alloy as the cathode electrode, and has dotted protrusions spaced apart from the counter electrode (Figures 5A and B).

### (Performance comparison with and without micro-capacitors)

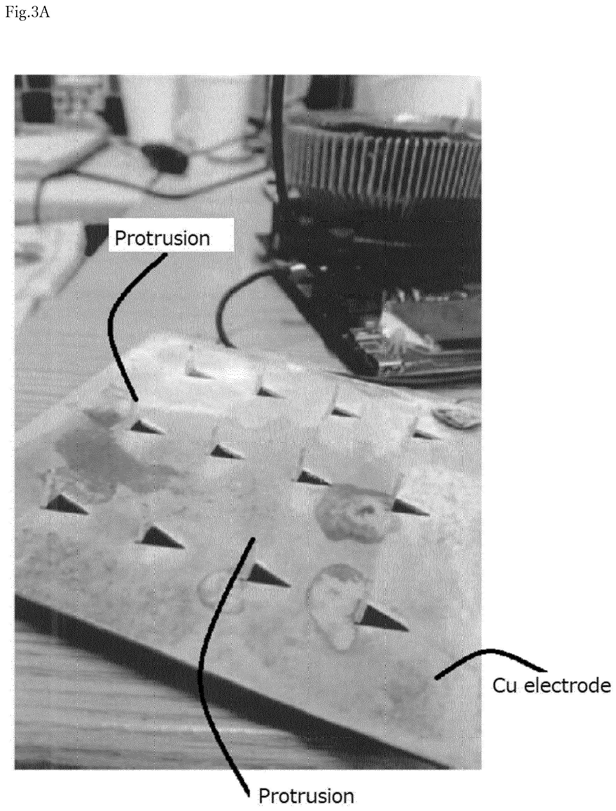

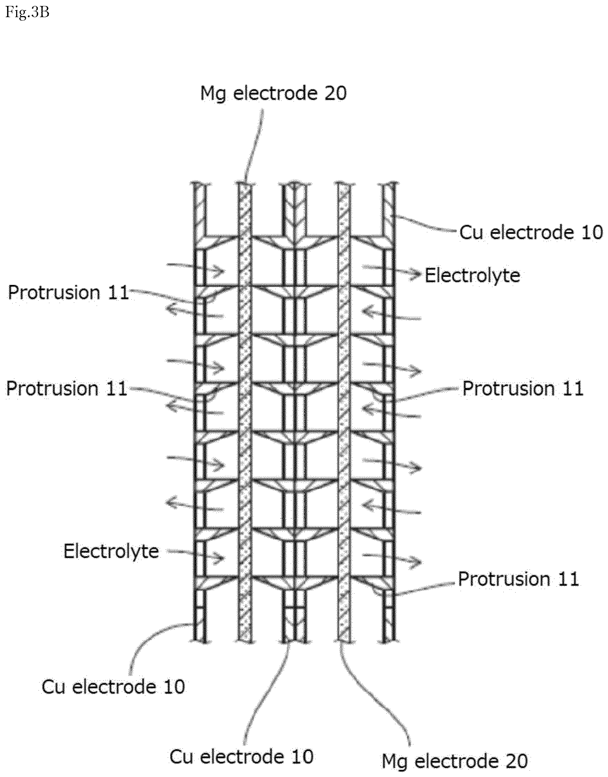

The copper-electrodes shown in Figures 2A and 2B and Figures 3A and 3B were used to compare the performance of batteries with and without the conceptual micro-capacitors shown in Figures 5A and 5B.

An upper open cuboid plastic container with a volume 3000ml is used. Numerous triangle projections 11 of the height of 50mm are formed by cutting at 150mm to 200mm intervals on the copper cathode electrodes sheet 10 of 100×100mm having 1mm thickness (photo 3A), as shown in 3B of the figure, both end copper sheet 10 are arranged with inward protrusion 11 and middle copper sheets are combined back-to-back and are arranged with outward protrusion 11. the magnesium anode electrodes sheet 20 of horizontal 100×100mm having 2mm thickness are sandwiched by the inward protrusion 11 and outward protrusion 11.

Using the above combined electrode, a microcapacitor can be formed on the top of the copper cathode electrode, as shown in Figures 5A and B.

On the other hand, as shown in 2A of the drawing, the copper electrode plate is attached with a T-shape spacer having 3 bended ends and 2 magnesium electrode plates of 100×100mm having a 1mm thickness are sandwiched by a pair of the copper electrode plates with the T shaped spacer. This structure is shown as Figure 2B, so the combined-electrode structure does not form the microcapsules shown in Figures 4A and 4B.

To a 1500ml of pure water, an electrolyte solution of 0.5 mol /l or more of sodium chloride, preferably more than 1.5 mol /l to less than 2 mol /l is added, and sodium percarbonate 50~100g and 30% hydrogen peroxide 50ml are added. After a certain period of time, hydrogen peroxide is consumed and the oxygen is reduced, so 10ml 30% hydrogen peroxide solution is added every 2-3 hours.

In the present embodiment, the performance of the electrode configurations of Figures 2A and 2B where the micro-capacitor is not formed, was compared with the performance of the electrode configurations of Figures 3A and 3B where the micro-capacitor is formed on the copper cathode electrode surface. Since the same conditions are applied except for the electrode configuration, the hydrogen peroxide fuel cell reaction in the alkaline electrolyzed water is accompanied by the magnesium air cell reaction.

While hydrogen peroxide decomposes into H₂O₂+2H₂O+2e⁻→2H₂O+2OH⁻, hydrogen peroxide not only causes an oxidation reaction of H₂O₂+2OH⁻→O ₂+2H₂O+2e⁻ on the cathode side, but also causes a metal oxidation reaction in an alkaline electrolyte solution of Mg→Mg^{2 +}+2e⁻, and finally oxygen is reduced and ionized on the cathode side as shown in the reaction of O₂+2H₂ O+4e⁻→4OH⁻. However, it can be understood that the oxygen gas is generated in the hydrogen peroxide fuel cell and the metal air cell reaction, but not only the oxygen gas but also the hydrogen gas is generated in the present inventive configuration. That is, as suggested in Non-Patent Document 3 (Eiji Water, Physicochemical Advancement (1936), 10(3):154-165), it is understood that the catalytic function works on the surface of the copper cathode electrode, and decomposition of hydrogen peroxide or decomposition of hydroxy ions occurs, and it seems to lead to the power generation reaction of

2H₂O₂→4 • OH→H₂+O₂+4e⁻

4OH⁻→H₂+Q₂+4e⁻

As described above, the present invention has been described using a Mg anode electrode and a Cu cathode electrode as a pair of electrodes, even if the other anode electrode selected from the same kind of typical metals such as aluminum, zinc and the alloy thereof is used, it goes without saying that the same kind of effect can be obtained although the electrode potential difference differs.

## Claims

1. An air electrode made of a transition metal selected from a group comprising copper and an alloy thereof, used for a metal-air cell comprising a neutral or alkaline electrolytic solution, an air electrode as a cathode, and an electrode as an anode made of a typical metal selected from a group comprising aluminum, zinc, magnesium, and an alloy thereof whose electrode potential is base from the air electrode, wherein the electrolytic solution contains hydrogen peroxide, and wherein the air electrode and the electrolytic solution make an electric double layer containing hydrogen peroxide as a dipole which is formed at an interface between the air electrode and the electrolytic solution.

2. A metal-air cell comprising a neutral or alkaline electrolytic solution, an air electrode, as a cathode and an electrode as an anode made of a typical metal selected from the group consisting of aluminum, zinc, magnesium, and an alloy thereof, the electrode potential of which is base than that of the air electrode, wherein the electrolytic solution contains hydrogen peroxide, and the air electrode is selected from a group comprising copper and an alloy thereof, wherein an electric double layer containing hydrogen peroxide as a dipole is formed at an interface between the air electrode and the electrolytic solution.

3. The metal-air battery according to claim 2, wherein the electrolyte comprises sodium percarbonate and/or hydrogen peroxide solution as a source of hydrogen peroxide, while the electrolyte comprises an electrolyte selected from alkali metal or alkaline earth metal halides.

4. The metal-air battery according to claim 2, wherein the anode electrode and the air electrode have at least one pair of electrode structures that are arranged so as to face each other with a predetermined interval for ensuring ion flow through the conductive metal spacer.

5. The metal-air battery according to claim 3, wherein the spacer is made of the same metal copper or copper alloy as the air electrode, and the air electrode has a point-like contact portion distributed at regular intervals on the surface of the anode electrode serving as a counter electrode.

6. The metal-air cell according to claim 2, which comprises a metal oxidation reaction in the alkaline region on the anode side of M - Mⁿ⁺+ne⁻ (where M is a typical metal selected from magnesium, aluminum, and zinc, and n is a valence), and an oxygen reduction and ionization reaction in the alkaline region on the cathode side of O ₂+2H₂O+4e⁻→4OH⁻.
wherein the cell further comprises a hydrogen peroxide reaction in the alkaline region on the anode side consisting of a reaction of H₂O₂+2OH⁻→O₂+2H₂O+2e⁻. and a hydrogen peroxide reaction in the alkaline region on the cathode side consisting of a reaction of H₂O₂+2H₂O+2e⁻→2H₂O+2OH.
